# EUROPÄISCHE PATENTSCHRIFT

(11) **EP 0 617 760 B1**
(45) Veröffentlichungstag und Bekanntmachung des Hinweises auf die Patenterteilung: **10.01.1996**
(21) Anmeldenummer: 93917518.8
(22) Anmeldetag: 25.08.1993
(51) Int. Cl.: F16B 5/12, E04F 19/02

(54) **BEFESTIGUNGSSTIFT ZUM BEFESTIGEN EINER SCHIENE**
RAIL-FASTENING PEG
CHEVILLE DE FIXATION DE RAIL

(30) Priorität: 26.08.1992 DE 9211476 U
(43) Veröffentlichungstag der Anmeldung: 05.10.1994
(73) Patentinhaber: ROBERTS DEUTSCHLAND GmbH, D-64546 Mörfelden-Walldorf (DE)
(72) Erfinder: SZABO, Stephan, CH-8606 Greifensee (CH)
(74) Vertreter: von Foerster, Eckard
(86) Internationale Anmeldenummer: CH9300212
(87) Internationale Veröffentlichungsnummer: WO9404833

(56) Entgegenhaltungen:
- EP-A- 0 342 429
- EP-A- 0 484 676
- FR-A- 2 026 305
- FR-A- 2 508 990

## Beschreibung

Die Erfindung betrifft ein Befestigungselement zum Befestigen einer eine längsverlaufende Nut aufweisenden Schiene auf einer eine Reihe von Löchern aufweisenden Unterlage, bestehend aus einem zwischen einem zum Einsetzen in die Schienennut bestimmten Kopf und einem mit diesem über einen Quersteg verbundenen, zum Verankern in der Unterlage bestimmten Verankerungsteil winklig abgekröpft ausgebildeten Kunststoffteilt.

Aus der FR.A 2 026305 ist ein Befestigungselement zum Befestigen einer Zierleiste an einer Autokarosserie bekannt, bei welchem der in der Zierleiste gehaltene Kopf über einen Quersteg mit dem im Karosserieblech gehaltenen Verankerungsteil verbunden ist, um mit dieser abgekröpften Ausbildung die Zierleistenbefestigung auch bei nicht unter der Zierleistenmittellinie liegenden Löchern im Karosserieblech zu ermöglichen. Der Verankerungsteil besteht dabei aus zwei federnden Schenkeln, die hinter dem Rand des Lochs im Karosserieblech federnd einrasten. Das Loch verläuft im Blech immer lotrecht zur Ebene des in der Zierleiste gehaltenen Kopfs des Befestigungselements.

Wenn die Unterlage jedoch ein Fussboden oder Estrich ist, auf dem aneinanderstossende Kanten von Auslegeteppichen durch eine die Kanten überdeckende Schiene festgehalten werden sollen, dann muss die Schiene auf dem mit einer Reihe von Bohrlöchern versehenen Fussboden oder Estrich fest verankert werden, was mit federnden Schenkeln zum Hintergreifen eines Lochrands nicht möglich ist.

Zum Teppichverlegen und -festhalten sind bei einem bekannten System gerade Befestigungselemente mit ihrem Kopf in einer an der Schiene unterseitig längsverlaufenden T-Nut gehalten und für eine lange Schiene werden entsprechend viele Befestigungselemente benötigt, für die die im Estrich vorgebohrten Löcher bei Verwendung der bekannten Befestigungselemente auf einer genau geraden Linie liegen mussten, was nur mit einer extra angefertigten Bohrlehre zu erreichen war und erhöhten Arbeits - und Zeitaufwand bedeutete.

Mit einem abgekröpften und mit dem Kopf in der Schiene drehbaren Befefestigungselement lässt sich dieses Problem beseitigen, nicht jedoch das Problem, wenn bei Armierungseisen oder anderen Hindernissen im Beton der Unterlage das eine oder andere Bohrloch schräg nach unten verläuft, d.h. nicht lotrecht zur Schienenunterseite. Nicht zueinander lotrecht ist bei einem senkrechten Bohrloch ferner eine schräge Schienenunterseite, wenn die Schiene auf den Rändern unterschiedlich dicker Teppiche aufliegt. Der Verankerungsteil des Befestigungselements mus für jeden dieser Fälle einen festen Haftsitz im Bohrloch gewährleisten.

Der Erfindung lag daher die Aufgabe zugrunde, ein Befestigungselement zu schaffen, das die Befestigung einer Schiene bei nicht zueinander lotrechter Lage von Schienenunterseite und Bohrloch zulässt. Zur Lösung dieser Aufgabe weist der Befestigungselement die Merkmale nach Anspruch 1 auf. Die Sollbiegestelle zwischen Kopf und Verankerungsteil des Befestigungselements lässt eine Abbiegung und / oder Verdrehung des Verankerungsteils gegenüber dem in einer Nut der Schiene gehaltenen Kopf zu.Der Verankerungsteil in Form eines mit einer Vielzahl umlaufender und verformbarer Rippen versehenen Schafts gewährleistet einen festen Haftsitz im Bohrloch.

Ein Ausführungsbeispiel des Erfindungsgegenstandes wird nachfolgend anhand der Zeichnungen näher beschrieben. Es zeigen:
Fig. 1, 2 und 3 das Befestigungselement von der Schmalseite, von der die Abkröpfung aufweisenden Seite, und von oben gesehen;
Fig. 4 einen Schienenabschnitt von der Unterseite gesehen, mit drei Befestigungselementen;
Fig. 5 eine Seitenansicht der auf Bodenbelägen aufliegenden Schiene gemäss Fig. 4, mit einem im Boden verankerten Befestigungselement;
Fig.6 eine abgewandelte Ausführungsform der Schiene im montierten Zustand gemäss Fig.5 , für die Ueberbrückung eines grösseren Höhenunterschieds verschiedener Bodenbeläge;
Fig.7 eine weitere abgewandelte Ausführungsform der Schiene, mit einem Zwischenstück zwischen Schiene und Befestigungselement;
Fig.8 die bevorzugte Ausführungsform des Befestigungselements, von der Unterseite gesehen.

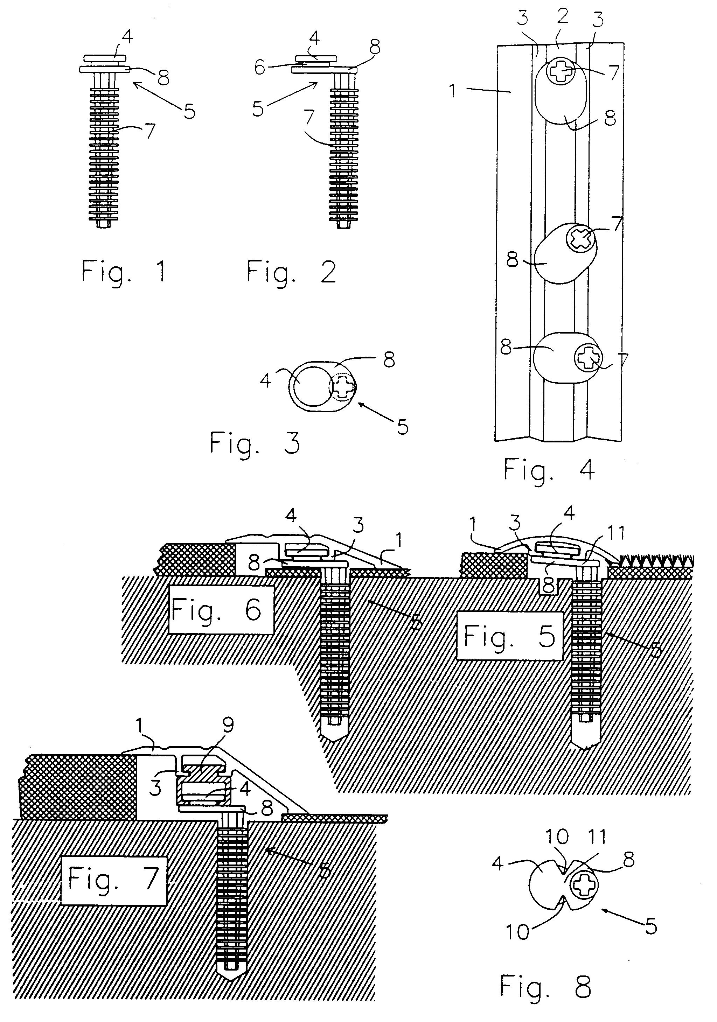

Gemäss Fig. 4 und 5 ist an der Schiene 1 unterseitig auf der Längsmitte eine T-Nut 2 ausgebildet, die von zwei mit der Schiene einstückig ausgebildeten Profilleisten 3 mit einwärts gerichteten Rändern gebildet ist. Unter diesen Rändern ist der kreisscheibenförmige Kopf 4 des in Fig. 1 bis 3 sowie in Fig. 8 in der bevorzugten Ausführungsform dargestellten Befestigungselementes 5 gehalten, so dass das Befestigungselement in der Nut 2 gedreht und längs derselben verschoben werden kann. Der gegenüber dem Kopf 4 im Durchmesser kleinere Hals 6 des Befestigungselementes 5 befindet sich bei in die Schiene eingesetztem Befestigungselement 5 zwischen den beiden Rändern der Profilleisten 3 und ein den Hals 6 mit dem Schaft 7 des Befestigungselementes 5 einstückig verbindender Quersteg 8 kommt dicht anschliessend an die Profilleisten 3 zu liegen. Das einstückig aus Kunststoffmaterial bestehende Befestigungselement 5 ist somit zwischen dem Schaft 7 und dem Kopf 4 rechtwinklig abgekröpft und der Abstand zwischen der Mittelachse des Kopfes und jener desSchafts ist zweckmässig gleich der halben Kopfbreite, oder mit anderen Worten derart, dass der Schaft in seiner gegenüber der T-Nut 2 maximal seitlich versetzten Lage annähernd unterhalb der einen der beiden Profilleisten 3 liegt, damit beim Einschlagen des Schaftes in ein Bohrloch durch Schlagen auf die Schienenaussenseite eine Abstützung für die Kraftübertragung vorhanden ist. ( Fig. 4) Der genannte Achsabstand bestimmt auch den Bereich, innerhalb welchem die Bohrlöcher im Boden beliebig weit aus der Mitte versetzt sein können. Der Schaft 7 besitzt aussen umlaufende Rippen für einen durch Verformung derselben entstehenden festen Haftsitz im Bohrloch.

Mit Hilfe von in der beschriebenen Weise ausgebildeten Befestigungselementen 5 kann eine Schienel, die gleiche oder verschiedene und auch unterschiedlich hohe Bodenbeläge überdeckt, in Bohrlöchern im Boden befestigt werden, wenn die Bohrlöcher nicht alle auf einer geraden Linie liegen.

Aus Fig.5 ist erkennbar, dass das Befestigungselement 5 soviel Flexibilität besitzt, dass bei einer Verlegung der Schiene 1 auf ungleich hohen Bodenbelägen der Winkel zwischen dem Schaft 7 und dem Quersteg 8 mehr als 90° beträgt. Diese Flexibilität lässt die Verwendung der Befestigungselemente zur Verankerung in Bohrlöchern auch zu, wenn diese nicht senkrecht ,sondern im Boden schräg verlaufen.Fig. 6 zeigt eine Schiene 1 mit verschieden hohen Schienenrändern, um Bodenbeläge mit verschiedener Materialstärke zu überbrücken.

Fig. 7 zeigt eine weitere Ausführungsform für die Befestigung einer abgewandelten Schiene 1, die einen grösseren Niveauunterschied verschiedener Bodenbeläge überbrückt. Bei dieser Schiene befindet sich die unterseitige T-Nut in einem grösseren Abstand vom Boden und zur Ueberbrückung dieses Abstands lassen sich die Schiene und dasBefestigungselement mit Hilfe eines Zwischenstücks 9 kuppeln, welches unten wie die Schiene eine T-Nut für den Kopf 4 des Befestigungselements 5 und oben einen gleichen Kopf wie das Befestigungselement besitzt, um an der Schiene befestigt zu werden.

Gemäss Fig. 8 besitzt die bevorzugte Ausführungsform des Befestigungselements im Quersteg 8 zwischen Kopf 4 und Schaft 7 eine Zone mit reduziertem Querschnitt als Sollbiegestelle 11, die eine Abbiegung oder Verdrehung des Schafts gegenüber dem in die Nut einer Schiene eingesetzten Kopf zulässt. Der Quersteg 8 weist an den gegenüberliegenden Rändern Einbuchtungen 10 auf, und die dadurch nur noch schmale Querstegmitte 11 bildet die Sollbiegestelle. Auf diese Weise lässt sich auch eine schräg angeordnete Schiene mit den Befestigungselementen in senkrechten oder auch in schräg in den Estrich verlaufenden Bohrlöchern verankern.

## Patentansprüche

1. Befestigungselement zum Befestigen einer eine längsverlaufende Nut aufweisenden Schiene auf einer eine Reihe von Löchern aufweisenden Unterlage, bestehend aus einem zwischen einem zum Einsetzen in die Schienennut bestimmten Kopf und einem mit diesem über einen Quersteg verbundenen, zum Verankern in der Unterlage bestimmten Verankerungsteil winklig abgekröpft ausgebildeten Kunststoffteilt, dadurch gekennzeichnet ,dass der Verankerungsteil als ein von Quersteg (8) ausgehender Schaft (7) mit einer Vielzahl unlaufender Rippen für einen durch Verformung derselben erzielbaren Verankerungs-Haftsitz ausgebildet ist und der Quersteg zwischen Kopf (4) und Schaft (7) eine Zone (11) mit reduziertem Querschnitt als Sollbiegestelle aufweist, um eine Abbiegung und / oder Verdrehung des Schafts (7) gegenüber dem Kopf (4) zuzulassen.

2. Befestigungselement nach Anspruch 1, dadurch gekennzeichnet, dass dass der Quersteg (8) an seinen einander gegenüberliegenden Rändern zwischen dem Kopf (4) und dem Schaft (7) Einbuchtungen (10) aufweist,und die zwischen den Einbuchtungen verbleibende Querstegmitte (11) die Sollbiegestelle bildet.

3. Befestigungselement nach Anspruch 1, dadurch gekennzeichnet, dass der Achsabstand zwischen dem Kopf (4) und dem Schaft (7) mindestens annähernd der halben Kopfbreite entspricht.

4. Befestigungselement nach Anspruch 1, dadurch gekennzeichnet, dass zwecks Verlängerung nach oben der Kopf (4) des Befestigungselements mit einem an der Unterseite eine T-Nut aufweisenden Zwischenstück (9) verbindbar ist, welches oben einen mit dem des Befestigungselements identischen Kopf aufweist.

## Claims

1. Rail-fastening peg for fastening a rail, having a longitudinal straight groove, on a substrate having a row of holes, consisting of a synthetic body being cranked between a head to be positioned into the longitudinal groove and an anchoring part of the peg to be anchored in the substrate and being linked to the head by a transversal part, characterized in that the anchoring part is formed as a shaft (7) being connected in a single peace to the tranversal part and having a plurality of circumferrential ribs for a tight fit anchoring effected by deformation of the ribs and that the transversal part (8) between the head (4) and the shaft (7) has an area of reduced cross-section as predetermined bending point to allow the shaft to be bent and / or rotated relativ to the head.

2. Rail-fastening peg according to claim 1, characterized in that the transversal part (8) has indentations (10) in its opposing edges between the head (4) and the shaft (7) and the central portion of the tranversal part (8) remaining between the indentations being the predetermined bending point.

3. Rail-fastening peg according to claim 1, characterized in that the axial distance between the head (4) and the shaft (7) corresponds at least approximatively to half the width of the head.

4. Rail-fastening peg according to claim 1, characterized in that the head (4) of the fastining peg for an extension upwards is adapted to be connected to an intermediate piece (9) having a T-formed groove in its underside and on its upper side a head substantially identical to the head (4) of the fastening peg.

## Revendications

1. Elément de fixation pour immobiliser un rail présentant une rainure s'étendant dans le sens de la longueur sur un support présentant une série de trous, comprenant une partie plastique conçue avec un angle coudé entre une tête destinée à être placée dans la rainure du rail et une pièce d'ancrage reliée à cette tête par une barrette transversale et destinée à la liaison avec le support, caractérisé en ce que la pièce d'ancrage est réalisée sous forme d'une tige (7) partant de la barrette transversale (8) avec un grand nombre de nervures périphériques pour un ajustement étroit, obtenu par la déformation de celles-ci, la barrette transversale présentant entre la tête (4) et la tige (7) une zone (11) avec une section réduite formant point de pliage, afin de permettre un pli et/ou la torsion de la tige (7) par rapport à la tête (4).

2. Elément de fixation selon la revendication 1, caractérisé en ce que la barrette transversale (8) présente des encoches (10) sur ses bords se faisant face, entre la tête (4) et la tige (7), le centre de la barrette transversale (11) restant entre ces encoches constituant le point destiné au pliage.

3. Elément de fixation selon la revendication 1, caractérisé en ce que la distance axiale entre la tête (4) et la tige (7) correspond au moins approximativement à la demi-largeur de la tête.

4. Elément de fixation selon la revendication 1, caractérisé en ce que, pour se prolonger vers le haut, la tête (4) de l'élément de fixation peut être reliée à une pièce intermédiaire (9), présentant sur le dessous une rainure en T, la pièce comportant sur le dessus une tête identique à celle de l'élément de fixation.
